(19) Europäisches Patentamt
European Patent Office
Office européen des brevets

(11) **EP 3 564 337 A1**

(12) **EUROPEAN PATENT APPLICATION**
published in accordance with Art. 153(4) EPC

(43) Date of publication:
06.11.2019 Bulletin 2019/45

(51) Int Cl.:
*C09K 5/14* (2006.01)     *F25B 9/00* (2006.01)

(21) Application number: 17886855.0

(22) Date of filing: 28.12.2017

(86) International application number:
PCT/JP2017/047150

(87) International publication number:
WO 2018/124256 (05.07.2018 Gazette 2018/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 28.12.2016 JP 2016256386

(71) Applicant: Santoku Corporation
Kobe-shi
Hyogo 658-0013 (JP)

(72) Inventors:
• KURIIWA, Takahiro
  Kobe-shi
  Hyogo 658-0013 (JP)
• MATSUMOTO, Yasutomo
  Kobe-shi
  Hyogo 658-0013 (JP)
• NAMAKI, Eiji
  Kobe-shi
  Hyogo 658-0013 (JP)

(74) Representative: Müller-Boré & Partner
Patentanwälte PartG mbB
Friedenheimer Brücke 21
80639 München (DE)

(54) **RARE EARTH REGENERATOR MATERIAL, AND REGENERATOR AND REFRIGERATOR EACH PROVIDED WITH SAME**

(57)     The present invention provides a regenerator material having a high specific heat in a temperature range of 10K or higher (in particular, a temperature range of 10 to 20K), as well as a regenerator and a refrigerator provided with the regenerator material.

Specifically, the present invention provides a regenerator material represented by general formula (1):

$$Er_{1-x}R_xNi_{1+\alpha} \qquad (1)$$

wherein x is 0<x<1, $\alpha$ is -1<$\alpha$<1, and R is at least one member selected from Y and lanthanoids (excluding Er), as well as a regenerator and a refrigerator provided with the regenerator material.

Fig. 2

EP 3 564 337 A1

**Description**

Technical Field

The present invention relates to a rare earth regenerator material, as well as a regenerator and a refrigerator provided with the regenerator material.

Background Art

Superconducting magnets have been currently put into practice, or the application thereof toward the practical use has been advanced, in superconducting MRI (magnetic resonance imaging) systems for photographing tomograms in the medical field, maglev trains, superconducting magnetic energy storage (SMES) systems, and the like. Superconducting magnets must be cooled to a cryogenic temperature of 4.2K (about -269°C), which is the boiling point of liquid helium (He); however, since liquid helium is expensive and requires a high level of skill for handling, high-performance small refrigerators have been developed as cooling means in substitution for liquid helium. As small refrigerators that have been put into practical use, Gifford-McMahon type small helium refrigerators (GM refrigerators), pulse tube refrigerators, and the like are known. In these refrigerators, for example, when the pre-cooled compressed helium is sent to a regenerator filled with a regenerator material, the compressed helium passes through the regenerator while expanding; as a result, the regenerator is cooled. Further, the regenerator material is also cooled when the helium sent to the regenerator is removed by reducing the pressure. The regenerator is further cooled as the cycle is repeated, and reaches the target temperature.

In previously known small refrigerators, lead (Pb) has been used as a regenerator material charged into a regenerator. Although regenerator materials are required to have a high specific heat in a low-temperature range, the specific heat of lead rapidly decreases with the temperature decrease; therefore, lead has generally been used at a temperature of 20K or higher. In recent years, lead has been replaced with bismuth (Bi) due to the RoHS Directive (Directive on the Restriction of the Use of Certain Hazardous Substances). However, since bismuth has a specific heat lower than that of lead in most low-temperature ranges, the development of a new regenerator material in place of bismuth has been desired, in view of improving the performance of small refrigerators.

Non-Patent Document 1 discloses holmium copper 2 ($HoCu_2$) as an antiferromagnet regenerator material with excellent specific heat characteristics at a low-temperature range of less than 10K. Holmium Copper 2 is a material showing two large specific heat peaks accompanying the two magnetic transitions in a low-temperature range of less than 10K. Since holmium copper 2 is an antiferromagnet, it receives little influence from the magnetic field, and therefore has been suitably used for MRI. Further, Non-Patent Document 1 discloses specific heat characteristics of other rare earth regenerator materials; for example, Non-Patent Document 1 discloses that ErNi has a sharp specific heat peak at around 10K, and that the specific heat of $Er_3Ni$ gradually increases with a temperature increase (see Fig. 2 of Non-Patent Document 1).

On the other hand, Patent Document 1 discloses a method for improving the refrigerating ability of a small refrigerator by limiting the average particle size, particle shape, and the like of a rare earth regenerator material particle group to a specific range in a rare earth regenerator material, such as holmium copper 2.

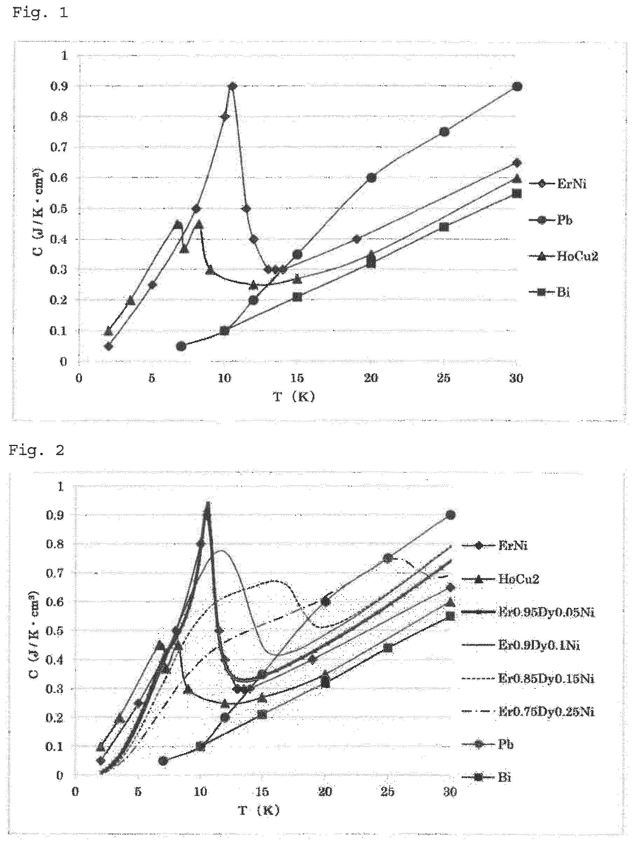

However, since holmium copper 2 has specific heat characteristics similar to those of bismuth in a temperature range of 10K or higher, holmium copper 2 cannot be regarded as a regenerator material having a high specific heat in a temperature range of 10K or higher (in particular, a temperature range of 10 to 20K). ErNi and $Er_3Ni$ also cannot be regarded as highly usable regenerator materials in a temperature range of 10 to 20K, since they have a low specific heat; or since the peak temperature is less than 15K, even though the specific heat peak is sharp (see Fig. 1 for the relationship between the temperature and the specific heat of each regenerator material).

Citation List

Patent Documents

Patent Document 1: Japanese Patent No. 5656842

Non-patent Documents

Non-patent Document 1: HoCu2 High-Performance Magnetic Regenerator Material, Masami OKAMURA et al., TOSHIBA REVIEW 2000 Vol. 55, No. 1

Summary of Invention

Technical Problem

A major object of the present invention is to provide a regenerator material having a high specific heat in a temperature range of 10K or higher (in particular, a temperature range of 10 to 20K), as well as a regenerator and a refrigerator provided with the regenerator material.

Solution to Problem

The inventors of the present invention conducted extensive research to achieve the above object, and found that the object can be achieved by a material that can be obtained by partially replacing Er contained in ErNi with other specific rare earth element(s). With this finding, the inventors completed the present invention.

Specifically, the present invention relates to the following rare earth regenerator material, as well as the following regenerators and refrigerator provided with the regenerator material.

1. A rare earth regenerator material represented by general formula (1):

$$Er_{1-x}R_xNi_{1+\alpha} \qquad (1)$$

wherein x is $0<x<1$, $\alpha$ is $-1<\alpha<1$, and R is at least one member selected from Y and lanthanoids (excluding Er).

2. The rare earth regenerator material according to Item 1, wherein R is Dy; and the rare earth regenerator material is represented by general formula (2):

$$Er_{1-x}Dy_xNi_{1+\alpha} \qquad (2)$$

wherein x is $0<x\leq0.3$, and $\alpha$ is $-1<\alpha<1$.

3. The rare earth regenerator material according to Item 1, wherein R is Gd; and the rare earth regenerator material is represented by general formula (3):

$$Er_{1-x}Gd_xNi_{1+\alpha} \qquad (3)$$

wherein x is $0<x\leq0.25$, and $\alpha$ is $-1<\alpha<1$.

4. The rare earth regenerator material according to Item 1, wherein R is Dy and Gd; and the rare earth regenerator material is represented by general formula (4):

$$Er_{1-x-y}Dy_xGd_yNi_{1+\alpha} \qquad (4)$$

wherein x is $0<x\leq0.3$, y is $0<y\leq0.25$, and $\alpha$ is $-1<\alpha<1$.

5. The rare earth regenerator material according to Item 1, wherein the $Ni_{1+\alpha}$ is partially replaced by M; and the rare earth regenerator material is represented by general formula (5):

$$Er_{1-x}R_xNi_{(1-z)+\alpha}M_z \qquad (5)$$

wherein x is $0<x<1$, z is $0<z<0.5$, and $\alpha$ is $-1<\alpha<1$, R is at least one member selected from Y and lanthanoids (excluding Er), and M is at least one member selected from the group consisting of Co, Cu, Fe, Al, Mn, Si, Ag, and Ru.

6. A regenerator filled with the rare earth regenerator material according to any one of Items 1 to 5 alone or in combination with one or more other regenerator materials.

7. The regenerator according to Item 6, wherein the rare earth regenerator material is in a state of (1) a spherical particle group, or (2) a sintered body of a spherical particle group.

8. A refrigerator provided with the regenerator according to Item 6 or 7.

Advantageous Effects of Invention

Since the rare earth regenerator material of the present invention has a high specific heat in a temperature range of 10K or higher (in particular, a temperature range of 10 to 20K), the rare earth regenerator material of the present invention is suitable for use in refrigeration in a temperature range of 10K or higher.

Brief Description of Drawings

Fig. 1 shows the relationship between the temperature and the specific heat of previously known regenerator materials.
Fig. 2 shows the relationship between the temperature and the specific heat of the rare earth regenerator material of the present invention (Er is partially replaced with Dy).
Fig. 3 shows the relationship between the temperature and the specific heat of the rare earth regenerator material of the present invention (Er is partially replaced with Gd).
Fig. 4 shows the relationship between the temperature and the specific heat of the rare earth regenerator material of the present invention (Er is partially replaced with a combination of Dy and Gd).

Description of Embodiments

The rare earth regenerator material of the present invention, and a regenerator and a refrigerator provided with the regenerator material, are described below.

1. Rare Earth Regenerator Material

The rare earth regenerator material of the present invention has a structure in which Er (erbium) contained in ErNi is partially replaced by other specific rare earth element(s) (R), and is characterized by being represented by general formula (1) below.

$$Er_{1-x}R_xNi_{1+\alpha} \qquad (1)$$

wherein x is $0<x<1$, $\alpha$ is $-1<\alpha<1$; and R is at least one member selected from Y and lanthanoids (excluding Er).
The R that partially replaces Er is at least one member selected from Y (yttrium) and lanthanoids (excluding Er). Examples of lanthanoids include La (lanthanum), Ce (cerium), Pr (praseodymium), Nd (neodymium), Pm (promethium), Sm (samarium), Eu (europium), Gd (gadolinium), Tb (terbium), Dy (dysprosium), Ho (holmium), Tm (thulium), Yb (ytterbium), and Lu (lutetium). R may be one of these elements, or a combination of two or more elements to enable combined replacement. In the present invention, R is preferably Dy or Gd, or a combination of Dy and Gd to enable combined replacement.
When R is one kind of element, x is preferably, within the range of $0<x<1$, $0.01\leq x\leq0.9$, more preferably $0.05\leq x\leq0.75$. Within the range of $-1<\alpha<1$, $\alpha$ is preferably $-0.9\leq\alpha\leq0.8$, and more preferably $-0.75\leq\alpha\leq0.5$.
When R is two kinds of elements, general formula (1) may be expressed as:

$$Er_{1-x-y}R_xR'_yNi_{1+\alpha} \qquad (1)'$$

wherein x is $0<x<1$, y is $0<y<1$, $0<x+y<1$, and $\alpha$ is $-1<\alpha<1$; and R and R' are different, and each represent at least one member selected from Y and lanthanoids (excluding Er).
The combined replacement amount x+y by R and R' is preferably $0.05\leq x+y\leq0.9$. Further, within the range of $-1<\alpha<1$, $\alpha$ is preferably $-0.9\leq\alpha\leq0.8$, and more preferably $-0.75\leq\alpha\leq0.5$.
(When R = Dy)
When R is Dy, the regenerator material may be expressed by general formula (2):

$$Er_{1-x}Dy_xNi_{1+\alpha} \qquad (2)$$

wherein x is $0<x\leq0.3$, and $\alpha$ is $-1<\alpha<1$.
When R is Dy, x may be $0<x\leq0.3$; and within this range, x is preferably $0.1\leq x\leq0.25$. Within the range of $-1<\alpha<1$, $\alpha$ is preferably $-0.9\leq\alpha\leq0.8$, and more preferably $-0.75\leq\alpha\leq0.5$.
Fig. 2 shows the relationship between the temperature and the specific heat of a rare earth regenerator material in which Er of ErNi is partially replaced with Dy (5 mol replacement, 10 mol% replacement, 15 mol% replacement, and 25 mol% replacement).

Fig. 2 indicates that the specific heat peak of the rare earth regenerator material in which 10 mol%, 15 mol%, and 25 mol% of Er is replaced by Dy is shifted to the high-temperature side (in particular, the specific heat peak is shifted to the high-temperature side for about 1.5K in the 10 mol% replacement), compared to that of ErNi. Fig. 2 also indicates that as the replacement amount of Dy is increased to 10 mol%, 15 mol%, and 25 mol%, the specific heat peak is shifted to the higher-temperature side, and the shape of the peak is changed to a faceted shape. The faceted shape means a state in which the peak continues, forming a upland-like shape.

In particular, the rare earth regenerator material in which 25 mol% of Er is replaced by Dy has the following features and the like.

1) having a faceted specific heat peak at around 10 to 25K;
2) the specific heat at 20K or lower is larger than that of lead;
3) a significant specific heat decrease is observed in the temperature side higher than the specific heat peak (about around 26K) ; and
4) the specific heat at around 9K is smaller than the specific heat of $HoCu_2$.

In particular, the features (1) and (2) are more useful compared with the previously known regenerator material.
(When R = Gd)
When R is Gd, the regenerator material may be expressed by general formula (3):

$$Er_{1-x}Gd_xNi_{1+\alpha} \qquad (3)$$

wherein x is $0<x\leq0.25$, and $\alpha$ is $-1<\alpha<1$.

When R is Gd, x may be $0<x\leq0.25$; and within this range, x is preferably $0.01\leq x\leq0.25$, and more preferably $0.05\leq x\leq0.25$. Within the range of $-1<\alpha<1$, $\alpha$ is preferably $-0.9\leq\alpha\leq0.8$, and more preferably $-0.75\leq\alpha\leq0.5$.

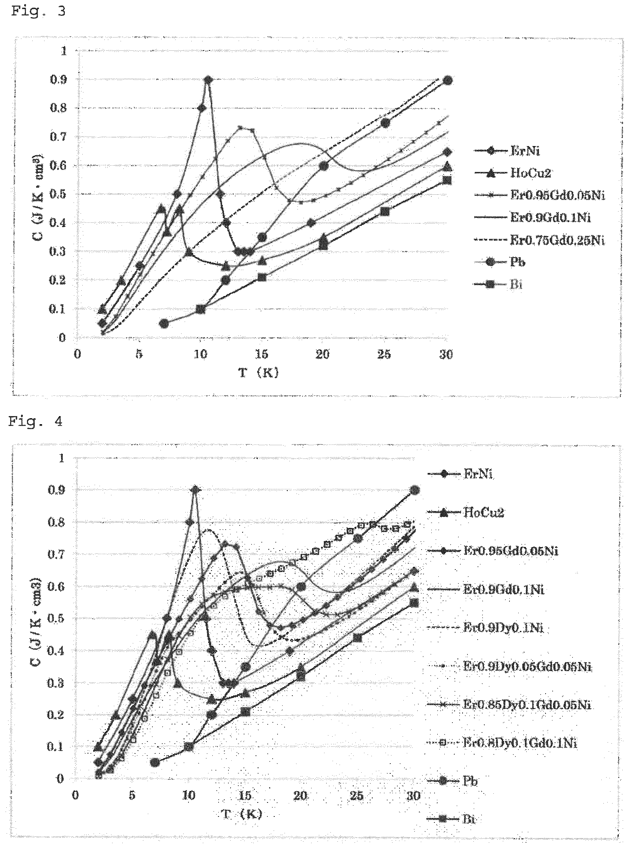

Fig. 3 shows the relationship between the temperature and the specific heat of a rare earth regenerator material in which Er of ErNi is partially replaced with Gd (5 mol% replacement, 10 mol% replacement, and 25 mol% replacement).

Fig. 3 indicates that the specific heat peak of the rare earth regenerator material in which 5 mol%, 10 mol%, and 25 mol% of Er is replaced by Gd is shifted to the high-temperature side (in particular, the specific heat peak is shifted to the high-temperature side for about 8K in the 10 mol% replacement), compared to that of ErNi. In particular, the rare earth regenerator material in which 10 mol% of Er is replaced by Gd has the following features and the like.

1) No clear faceted specific heat peak is observed;
2) the specific heat at 20K or lower is larger than that of lead;
3) a significant specific heat decrease is observed in the temperature side higher than the specific heat peak; and
4) the specific heat at around 9K is almost the same as the specific heat peak of $HoCu_2$ in the high-temperature side.

A comparison of R = Dy (10 mol% replacement) and R = Gd (10 mol% replacement) reveals that R = Gd has a higher effect of increasing the specific heat peak if the replacement amount with respect to Er is the same. On the other hand, in a comparison between R = Dy (15 mol% replacement) and R = Gd (10 mol% replacement), it can be said that R = Dy (15 mol% replacement) in which the specific heat peak is in the form of a facet is preferable in regards to the specific heat peak being present at substantially the same temperature.

Further, although the specific heat peak of the rare earth regenerator material in which 25 mol% of Er is replaced by Gd is greatly shifted to the high-temperature side (the peak is in the temperature side higher than 30K), compared to ErNi, the rare earth regenerator material has the following features and the like.

1) A clear faceted specific heat peak is not observed as a result of the shift;
2) the specific heat at about 23K or lower is larger than that of lead;
3) a significant specific heat decrease is not observed at 30K or lower.
4) the specific heat at around 9K is smaller than the specific heat peak of $HoCu_2$ in the high-temperature side.
(Combined replacement with R = Dy, and Gd)

In the case of combined replacement with R = Dy and Gd, the regenerator material may be expressed by general formula (4):

$$Er_{1-x-y}Dy_xGd_yNi_{1+\alpha} \qquad (4)$$

wherein x is $0<x\leq0.3$, y is $0<y\leq0.25$, and $\alpha$ is $-1<\alpha<1$.

In the case of combined replacement when R is Dy and Gd, x representing the molar amount of Dy may be $0<x\leq0.3$; and within this range, x is preferably $0<x\leq0.25$, and more preferably $0<x\leq0.2$. y representing the molar amount of Gd may be $0<y\leq0.25$; and within this range, y is preferably $0<y\leq0.15$, and more preferably $0.05\leq y\leq0.15$.

The x+y as the combined replacement amount by Dy and Gd is preferably $0<x+y\leq0.5$, and more preferably $0.05\leq x+y\leq0.35$. Further, within the range of $-1<\alpha<1$, $\alpha$ is preferably $-0.9\leq\alpha\leq0.8$, and more preferably $-0.75\leq\alpha\leq0.5$.

Fig. 4 shows the relationship between the temperature and the specific heat of a rare earth regenerator material in which Er of ErNi is partially replaced with Dy and Gd (5 mol% replacement each of Dy and Gd, 10 mol% replacement each of Dy and Gd, and 10 mol% replacement by Dy and 5 mol% replacement by Gd).

Fig. 4 reveals that the specific heat peak of the rare earth regenerator material in which Er is partially replaced by a combination of Dy and Gd (5 mol% replacement each of Dy and Gd, 10 mol% replacement each of Dy and Gd, and 10 mol% replacement by Dy and 5 mol% replacement by Gd) is shifted to the higher-temperature side compared with ErNi. Further, in particular, it was also revealed that the specific heat peak of the rare earth regenerator material in which Er is replaced by a combination of Dy and Gd (10 mol% replacement each of Dy and Gd) is shifted to the higher-temperature side, compared to ErNi; that the peak shape is changed to a faceted shape; and that the temperature range in which a high specific heat is obtained was expanded. More specifically, the following features were observed.

1) A faceted specific heat peak is observed at around 10 to 25K;
2) the specific heat at 25K or lower is larger than that of lead;
3) a slight specific heat decrease is observed in the temperature side higher than the specific heat peak; and
4) the specific heat at around 9K is similar to the specific heat of $HoCu_2$.

More specifically, it is possible to achieve the above features (2), (3), and (4), which could not have been achieved with the singly replaced rare earth regenerator material represented by general formulas (2) and (3). Accordingly, by replacing 20 mol% of Er by a combination of Dy and Gd, the specific heat characteristic is further improved compared to the rare earth regenerator material in which 25 mol% of Er is replaced by Dy, and the specific heat characteristic is improved more efficiently by the combined replacement than the single replacement.

(Partial Replacement of Ni by M)

The present invention also encompasses, among the rare earth regenerator materials represented by general formula (1), a rare earth regenerator material in which $Ni_{1+\alpha}$ is partially replaced by M, and is represented by general formula (5):

$$Er_{1-x}R_xNi_{(1-z)+\alpha}M_z \qquad (5)$$

wherein x is $0<x<1$, z is $0<z<0.5$, and $\alpha$ is $-1<\alpha<1$; and R is at least one member selected from Y and lanthanoids (excluding Er). M is at least one member selected from the group consisting of Co, Cu, Fe, Al, Mn, Si, Ag, and Ru.

The rare earth regenerator materials represented by general formulas (2) to (4) are included in the rare earth regenerator material represented by general formula (1). Therefore, the present invention also encompasses, among the rare earth regenerator materials represented by general formulas (2) to (4), a rare earth regenerator material in which $Ni_{1+\alpha}$ is partially replaced by M.

M is an element capable of adjusting the specific heat peak temperature of the rare earth regenerator material according to the type and the replacement amount with respect to Ni. Specific examples thereof include at least one member selected from the group consisting of Co, Cu, Fe, Al, Mn, Si, Ag, and Ru. M may be used for a single or combined replacement. Among various examples of M, at least one member selected from Co, Cu, Fe, Al, Mn, and the like is preferable. The replacement amount (mol%) by M varies depending on the type and the degree of adjustment of the specific heat peak; however, z representing the replacement amount by M may be within the range of $0<z<0.5$, and preferably within the range of $0<z\leq0.45$.

2. Regenerator and Refrigerator

A regenerator may be constituted by filling it with the rare earth regenerator material of the present invention solely or in combination with other regenerator materials. The other regenerator materials are not limited, and known regenerator materials may be appropriately combined. Further, a refrigerator (for example, a refrigerator for liquid hydrogen production, a 10K-specific refrigerator, a 4KGM refrigerator) provided with the regenerator can be constituted.

The properties of the rare earth regenerator material in the regenerator are not limited, and may be appropriately selected from 1) a state of a spherical particle group, 2) a state of a sintered body of a spherical particle group, and the like, according to the use.

When the rare earth regenerator material is used in the state of a spherical particle group, for example, a raw material that was mixed so as to have a predetermined composition after dissolution and casting is prepared, and then the raw material is dissolved in a melting furnace such as a vacuum high-frequency melting furnace under an inert gas atmosphere; then, the spherical rare earth regenerator material is obtained by an atomizing method such as gas atomization or disk atomization, a rotating electrode method, or the like. Further, by performing sieving and shape classification as necessary, a desired powder can be obtained. The particle size (D50) of the spherical particles is not limited; however, the particle size is preferably in a range of not less than 100 $\mu$m and not more than 750 $\mu$m, and more preferably in a range of not less than 100 $\mu$m and not more than 300 $\mu$m.

The aspect ratio of the spherical rare earth regenerator material is preferably 10 or less, more preferably 5 or less, and most preferably 2 or less. By using a spherical rare earth regenerator material having a small aspect ratio, it is possible to enhance the filling property into the regenerator, and more easily obtain a sintered body having uniform communication holes when the sintered body of a spherical particle group is obtained. In the measurement of aspect ratio in this specification, the spherical powder of the rare earth regenerator material was mixed well, and then a sample obtained by the quartering method was subjected to aspect ratio measurement with an optical microscope by using 100 arbitrary particles. Then, an average value of the measured values was calculated. This method was repeated 3 times, and the average value of 3 measurements was found as the aspect ratio.

When the rare earth regenerator material is used in the form of a sintered body of spherical powder, the spherical powder of the rare earth regenerator material is introduced into a mold; and then subjected to a heat treatment for not less than an hour and not longer than 40 hours at a temperature of not less than 700°C and not more than 1200°C, in an atmosphere furnace in an inert gas atmosphere of Ar, nitrogen, or the like, thereby obtaining a sintered body. By controlling the temperature and the duration of the heat treatment, the filling rate of the rare earth regenerator material in the obtained sintered body can be controlled. The heat treatment can also be performed by an electric current sintering method, a hot-pressing method, or the like. The porosity in the sintered body is not limited; however, the porosity is preferably in a range of 28 to 40%, further preferably in a range of 32 to 37%. When the porosity is within the above range, the rare earth regenerator material can be charged into the regenerator at a high filling rate.

The porosity in this specification refers to a value found according to the following formula.

$$\{1 - \text{measured weight}/(\text{apparent volume} \times \text{specific gravity})\} \times 100$$

$$\text{(provided that the apparent volume means, for example, for a}$$

$$\text{cylindrical sample, a volume obtained from the diameter and the}$$

$$\text{length)}$$

The shape and the size of the sintered body are not particularly limited, and may be appropriately selected according to the shape of the regenerator. For example, the shape of the sintered body may be a cylindrical shape, a prismatic shape, or the like. In addition, the sintered body may also have a tapered shape in view of the engagement or the like.

The shape of the sintered body can be adjusted upon sintering of the spherical powder by charging the spherical powder into a container having a desired shape. For example, if the sintered body has a cylindrical shape, the sintering may be performed by filling a cylindrical container with the spherical powder.

The sintered body may have a multilayer structure. The multilayer structure herein means, for example, in the case of a cylindrical shape, a structure in which a single or plural outer layers are formed on the outside of the inner layer. Examples of such a multilayer structure include a structure formed from a plurality of layers having different porosities. The multilayer structure may also be a structure in which a plurality of layers are formed from different types of materials. The multilayer structure may further be, for example, a laminate in which a plurality of layers with different specific heat characteristics are laminated in order.

As described above, each of the rare earth-containing compounds represented by general formulas (1) to (5) is used as a rare earth regenerator material, and a regenerator filled with the rare earth regenerator material and a refrigerator provided with the regenerator are provided as the inventions utilizing the rare earth-containing compound. As is apparent from the foregoing descriptions, the present invention also includes an invention of a use of at least one rare earth-containing compound selected from the rare earth-containing compounds represented by general formulas (1) to (5) as a regenerator material. The present invention also includes an invention of a regenerator comprising a regenerating means, which is at least one rare earth-containing compound selected from the rare earth-containing compounds represented by general formulas (1) to (5).

Examples

The present invention is more specifically explained below in reference to Examples. However, the present invention is not limited to these Examples.

Examples 1 to 10 (Synthesis of Rare Earth Regenerator Material

Alloy Powder)

Each alloy powder in Table 1 as the rare earth regenerator material of the present invention is obtained by dissolution and casting.
The method is specifically described below.
First, raw materials, each of which was mixed to have the composition shown in Fig. 1 after dissolution and casting, were prepared; and dissolved in an inert gas atmosphere in a high-frequency, heat-melting furnace, thereby obtaining molten alloys.
Each molten alloy was cast into a copper mold to obtain an alloy.
Thereafter, in order to increase the homogeneity of the composition of the resulting alloy ingot, a homogenization treatment was performed for 0.01 to 40 hours at a temperature equal to 95% of the melting point obtained from the state diagram; followed by coarse pulverization, thereby obtaining alloy powders having an average particle size (D50) of 50 to 300 $\mu$m.
Table 1 shows the homogenization temperatures and the average particle sizes.
Next, the specific heat of each alloy powder obtained above was determined by a thermal relaxation method using a PPMS (Physical Property Measurement System). Figs. 2 to 4 show the results.

[Table 1]

| | Type of Rare Earth Regenerator Material Alloy Powder | Homogenization Treatment (Temperature, Time) | Average Particle Size D50($\mu$m) |
|---|---|---|---|
| Example 1 (Replaced by Dy) | $Er_{0.95}Dy_{0.05}Ni$ | 1080°C, 1 hr | 153.6 |
| Example 2 (Replaced by Dy) | $Er_{0.9}Dy_{0.1}Ni$ | 1080°C, 5 hr | 94.2 |
| Example 3 (Replaced by Dy) | $Er_{0.85}Dy_{0.15}Ni$ | 1090°C, 5 hr | 181.9 |
| Example 4 (Replaced by Dy) | $Er_{0.75}Dy_{0.25}Ni$ | 1090°C, 10 hr | 197.8 |
| Example 5 (Replaced by Gd) | $Er_{0.9}Gd_{0.1}Ni$ | 1080°C, 5 hr | 211. 0 |
| Example 6 (Replaced by Gd) | $Er_{0.75}Gd_{0.25}Ni$ | 1090°C, 8 hr | 235.5 |
| Example 7 (Replaced by Gd) | $Er_{0.95}Gd_{0.05}Ni$ | 1080°C, 3 hr | 172.4 |
| Example 8 (Replaced by a combination of Dy and Gd) | $Er_{0.8}Dy_{0.1}Gd_{0.1}Ni$ | 1090°C, 7 hr | 185.7 |
| Example 9 (Replaced by a combination of Dy and Gd) | $Er_{0.85}Dy_{0.1}Gd_{0.05}Ni$ | 1090°C, 5 hr | 241.3 |
| Example 10 (Replaced by a combination of Dy and Gd) | $Er_{0.9}Dy_{0.05}Gd_{0.05}Ni$ | 1080°C, 4 hr | 176.0 |

**Claims**

1. A rare earth regenerator material represented by general formula (1):

$$Er_{1-x}R_xNi_{1+\alpha} \qquad (1)$$

wherein x is $0<x<1$, $\alpha$ is $-1<\alpha<1$, and R is at least one member selected from Y and lanthanoids (excluding Er).

2. The rare earth regenerator material according to claim 1, wherein R is Dy; and the rare earth regenerator material is represented by general formula (2):

$$Er_{1-x}Dy_xNi_{i+\alpha} \qquad (2)$$

wherein x is $0<x\leq0.3$, and $\alpha$ is $-1<\alpha<1$.

3. The rare earth regenerator material according to claim 1, wherein R is Gd; and the rare earth regenerator material is represented by general formula (3):

$$Er_{1-x}Gd_xNi_{1+\alpha} \qquad (3)$$

wherein x is $0<x\leq0.25$, and $\alpha$ is $-1<\alpha<1$.

4. The rare earth regenerator material according to claim 1, wherein R is Dy and Gd; and the rare earth regenerator material is represented by general formula (4):

$$Er_{1-x-y}Dy_xGd_yNi_{1+\alpha} \qquad (4)$$

wherein x is $0<x\leq0.3$, y is $0<y\leq0.25$, and $\alpha$ is $-1<\alpha<1$.

5. The rare earth regenerator material according to claim 1, wherein the $Ni_{1+\alpha}$ is partially replaced by M; and the rare earth regenerator material is represented by general formula (5):

$$Er_{1-x}R_xNi_{(1-z)+\alpha}M_z \qquad (5)$$

wherein x is $0<x<1$, z is $0<z<0.5$, and $\alpha$ is $-1<\alpha<1$, R is at least one member selected from Y and lanthanoids (excluding Er), and M is at least one member selected from the group consisting of Co, Cu, Fe, Al, Mn, Si, Ag, and Ru.

6. A regenerator filled with the rare earth regenerator material according to any one of claims 1 to 5 alone or in combination with one or more other regenerator materials.

7. The regenerator according to claim 6, wherein the rare earth regenerator material is in a state of (1) a spherical particle group, or (2) a sintered body of a spherical particle group.

8. A refrigerator provided with the regenerator according to claim 6 or 7.

Fig. 1

Fig. 2

Fig. 3

Fig. 4

## INTERNATIONAL SEARCH REPORT

| International application No. |
| --- |
| PCT/JP2017/047150 |

**A. CLASSIFICATION OF SUBJECT MATTER**
Int.Cl. C09K5/14(2006.01)i, F25B9/00(2006.01)i

According to International Patent Classification (IPC) or to both national classification and IPC

**B. FIELDS SEARCHED**

Minimum documentation searched (classification system followed by classification symbols)
Int.Cl. C09K5/14, F25B9/00

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| X | CN 103031501 A (DALIAN INSTITUTE OF CHEMICAL PHYSICS, CHINESE ACADEMY OF SCIENCES) 10 April 2013, claims 1-6, examples 1, 3-4, 6-12, 15-16, 20-22, 25-26, 31-33, 36-38, fig. 1-9 (Family: none) | 1-8 |
| X | JP 6-240241 A (TOSHIBA CORP.) 30 August 1994, claims 1-2, examples 6-9 (Family: none) | 1-2, 6-8 |
| A | | 3-5 |

☒ Further documents are listed in the continuation of Box C.   ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 25 January 2018 (25.01.2018) | 06 February 2018 (06.02.2018) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

12

**INTERNATIONAL SEARCH REPORT**

International application No.

PCT/JP2017/047150

C (Continuation). DOCUMENTS CONSIDERED TO BE RELEVANT

| Category* | Citation of document, with indication, where appropriate, of the relevant passages | Relevant to claim No. |
|---|---|---|
| X | JP 4-186802 A (RES DEV CORP OF JAPAN) 03 July 1992, claims 1-6, examples, fig. 1-6 (Family: none) | 1-2, 6-8 |
| A | | 3-5 |
| X | JP 2000-1670 A (SHIN-ETSU CHEMICAL CO., LTD.) 07 January 2000, claims 1-2, example 3 (Family: none) | 1-2, 6-8 |
| A | | 3-5 |
| X | JP 4-6352 A (NIPPON MINING CO., LTD.) 10 January 1992, claims 1-3, examples 1-2 (Family: none) | 1-2, 6-8 |
| A | | 3-5 |
| X | WO 2006/092871 A1 (SUMITOMO HEAVY INDUSTRIES, LTD.) 08 September 2006, example 2, fig. 3, 12-15 & US 2008/0104967 A1, example 2, fig. 3, 12-15 & JP 2006-242484 A & EP 1854859 A1 & CN 101124289 A | 1, 6-8 |
| A | | 2-5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5656842 B

**Non-patent literature cited in the description**

- **MASAMI OKAMURA et al.** HoCu2 High-Performance Magnetic Regenerator Material. *TOSHIBA REVIEW,* 2000, vol. 55 (1